# FASCICULE DE BREVET EUROPEEN

(11) **EP 3 729 565 B1**
(45) Date de publication et mention de la délivrance du brevet: **27.07.2022**
(21) Numéro de dépôt: 18833867.7
(22) Date de dépôt: 20.12.2018
(51) Int. Cl.: H01R 13/58, H02G 3/04, H02G 3/18

(54) **ADAPTATEUR DE SORTIE DE HARNAIS D'UN CHEMIN DE CÂBLAGE ET PROCÉDÉ D'INSTALLATION D'UN TEL ADAPTATEUR**
KABELBAUMAUSGANGSADAPTER EINER KABELRINNE UND VERFAHREN ZUR INSTALLATION EINES SOLCHEN ADAPTERS
HARNESS OUTLET ADAPTER OF A CABLE TRAY AND METHOD FOR INSTALLING SUCH AN ADAPTER

(30) Priorité: 21.12.2017 FR 1762716
(43) Date de publication de la demande: 28.10.2020
(73) Titulaire: Latelec, 31670 Labege Occitanie (FR)
(72) Inventeur: BERDEIL, Olivier, 31500 Toulouse (FR); CYRUS, Didier, 31500 Toulouse Occitanie (FR); ZUCCHETTI, Jean, François, 31620 Castelnau d'Estrefonds Occitanie (FR)
(74) Mandataire: Junca, Eric
(86) Numéro de dépôt international: PCT/EP2018/086058
(87) Numéro de publication internationale: WO 2019/122053

(56) Documents cités:
- WO-A1-2016/156706
- JP-A- 2013 230 012
- US-A- 5 908 180
- US-A1- 2005 139 372
- US-A1- 2012 012 347
- US-A1- 2015 083 486

## Description

### DOMAINE ET ETAT DE LA TECHNIQUE

L'invention concerne un adaptateur équipant une portion de harnais lors de sa sortie d'un chemin de câblage afin de fournir de la puissance électrique à au moins un équipement de localisation prédéfinie via un chemin préparé, en particulier pour installer des liaisons d'alimentation électrique des différents systèmes avioniques d'un aéronef: actionneurs du train d'atterrissage, compresseurs de conditionnement d'air, pompes hydrauliques de pressurisation, pompes d'alimentation en kérosène des moteurs, actionneurs de dégivrage, de ventilation, alimentation des façades d'instrumentation du système cockpit, calculateurs de la baie avionique, équipements techniques (fours des cuisines - « galleys » en dénomination anglaise -, éclairage, ventilation) et domestiques (écrans de divertissement) des réseaux du système cabine.

On connait par exemple du document WO 2016/156706 A1 un adaptateur de passage d'un harnais à travers une paroi en sortie d'un chemin de câblage. Cet adaptateur possède une première partie cylindrique interne au harnais et une deuxième partie cylindrique de sortie à prise externe d'une gaine de protection de harnais. Un tel adaptateur en deux parties ne permet pas une installation facile et rapide des câbles. Par ailleurs, il est décrit dans le document US 5908180A un assemblage de demi-supports pour maintenir un adaptateur de câble dans l'orifice d'un boitier. Cependant, cet assemblage utilise un matériau ignifuge comme moyen de protection interne, ce qui complexifie l'installation du câble.

Les adaptateurs sont classiquement monoblocs et métalliques, constitués en général en acier inoxydable passivé. Ils contiennent une protection interne en PTFE (acronyme de polytétrafluoroéthylène) pour supprimer les risques de frottement des câbles du harnais à l'intérieur de l'adaptateur, en particulier dans les conditions vibratoires de l'environnement avionique. Les câbles du harnais sont introduits un à un à travers les protections de chaque adaptateur selon un découpage de passage prédéterminé afin de pré-positionner les câbles en vue de leurs installations.

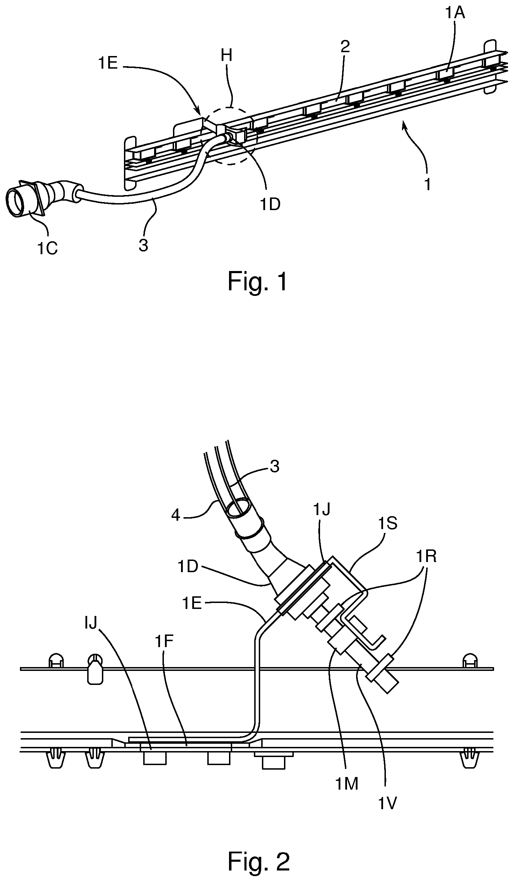

Un tel adaptateur est illustré en figure 1 par la vue en coupe schématique d'un chemin de câblage 1 d'avion. Sur cette vue en coupe schématique, un faisceau de câbles 2 est maintenu par des attaches 1A répartis le long du chemin de câblage 1.

Entre deux attaches 1A, une sortie « H » de harnais de câbles 3 est illustrée. Le harnais 3 est constitué de plusieurs câbles à répartir dans un système avionique environnant à partir d'un connecteur 1C couplé au harnais 3 en son extrémité. L'extraction du harnais 3 est réalisée par un adaptateur monobloc 1D porté par un étrier 1E, cet adaptateur étant illustré en détail sur la vue en coupe partielle de la figure 2.

Sur la figure 2, il apparaît que l'adaptateur monobloc 1D de sortie de harnais est maintenu en place par l'étrier en « S » 1E monté sur un écrou d'ancrage 1F. Les liaisons entre l'étrier 1E d'une part et l'écrou 1F ou l'adaptateur 1D sont étanchéifiées à travers des joints 1J en résine époxy. De plus, le harnais 3 est positionné en amont de l'adaptateur 1D par un collier de maintien 1M monté sur un support métallique 1S relié à l'adaptateur 1D, et des rubans de serrage thermo-rétractables et/ou auto-amalgamants 1R viennent assembler les câbles 2 du harnais 3. La protection mécanique du harnais 3 est assurée par un revêtement en PTFE 1V. En sortie de l'adaptateur 1D le harnais 3 est enveloppé dans une gaine de protection 4 contre les interférences électromagnétiques (EMI en abrégé).

### EXPOSE DE L'INVENTION

L'invention vise à supprimer les protections internes qui permettent d'éviter les frottements des câbles à l'intérieur de l'adaptateur. Or, ces protections nécessitent une grande variété de moyens - rubans de serrage, collier de maintien, joints de résine époxy - qui rendent plus complexe la mise en œuvre de l'installation des câbles un à un dans l'adaptateur selon le découpage de passage prédéterminé, ce qui augmente sensiblement le temps de montage et d'installation du harnais. Elle vise également à réduire le poids des moyens dédiés à l'assemblage du harnais en diminuant le nombre de composants qui interviennent dans l'installation de l'adaptateur.

Pour ce faire, l'invention prévoit de remplacer la transition rigide métallique monobloc, matérialisé par un adaptateur du type décrit ci-dessus, par la réunion de deux entités complémentaires formant une transition en matériau plastique qui viennent enserrer le harnais et le positionner extérieurement.

Plus précisément, la présente invention a pour objet un adaptateur de sortie de harnais d'un chemin de câblage comportant deux demi-coques demi-cylindriques en matériau plastique, assemblées de manière complémentaire pour former une pièce cylindrique s'étendant selon au moins un axe longitudinale et définissant deux parties cylindrique, une première partie cylindrique de support interne de harnais et de réception externe d'au moins un collier de serrage des demi-coques assemblées, et une deuxième partie cylindrique de sortie à prise externe d'au moins une gaine de protection du harnais.

Dans ces conditions, le nombre de pièces et le poids de l'adaptateur sont sensiblement diminués. Selon des modes de réalisation préférés:
- les parties cylindriques comportent des alésages internes cylindriques de base circulaire le long d'une bande de protection du harnais, l'alésage interne de la deuxième partie de sortie de harnais à prise externe présentant un diamètre supérieur à la première partie de support interne du harnais;
- les alésages sont couplés par un alésage transitoire, avantageusement de diamètre linéairement progressif, situé dans la deuxième partie de sortie de harnais;
- deux demi-bagues de positionnement enclipsées forment une bague de positionnement de l'adaptateur venant des demi-coques au niveau de la deuxième partie de prise externe;
- deux demi-bagues de blocage enclipsées forment une première bague de blocage autour d'une gorge creusée sur la première partie cylindrique, la bague de blocage étant comprimée par le collier de serrage;
- une deuxième bague de blocage formée de deux demi-bagues enclipsées est agencée entre la première bague de blocage et une cloison servant de support agencée entre les deux parties de l'adaptateur;
- la deuxième partie de sortie de harnais forme un angle compris entre 0 et 90° avec la première partie de support interne;
- la deuxième partie de sortie de harnais est couplée à deux gaines de protection du harnais, une gaine métallique et une gaine de protection EMI, avantageusement équipées d'un sur-tressage;
- le matériau plastique est constitué de couches additives produites en impression 3D et recouvertes d'un dépôt métallique de protection EMI;
- la bande de protection du harnais au niveau des alésages internes est constituée d'un matériau choisi entre une gaine textile, un matériau thermo-rétractable et un matériau auto-amalgamant.

L'invention a également pour objet un aéronef équipé de chemins de câblage et d'adaptateurs tels que définis ci-dessus afin de répartir des harnais en sortie des chemins de câble vers les différents systèmes avioniques afin de les alimenter en puissance électrique.

L'invention se rapporte aussi à un procédé d'installation d'un tel adaptateur de harnais en sortie d'un chemin de câblage. Ce procédé comporte les étapes successives suivantes:
- constituer le harnais par sélection de câbles du chemin de câblage;
- envelopper une portion du harnais par une bande de protection, de longueur supérieure à la longueur de l'adaptateur, à un emplacement prédéfini par le positionnement final de l'adaptateur;
- assembler les deux demi-coques de l'adaptateur autour de la bande de protection;
- emmancher au moins une gaine de protection sur le harnais en sortie de l'adaptateur par couplage en prise sur la deuxième partie de sortie de harnais et introduire le harnais dans un orifice de cloison servant de support;
- positionner l'adaptateur dans l'orifice de la cloison de sorte que la bague de positionnement de la deuxième partie de sortie de harnais vienne en contact contre une première face de la cloison;
- enclipser les demi-bagues de blocage pour former la bague de blocage dans la gorge de la première partie de support interne de harnais et consolider le positionnement de l'adaptateur par pression de cette bague de blocage contre la seconde face de la cloison, et
- comprimer la bague de blocage par le collier de serrage.

Avantageusement, deux demi-bagues d'une deuxième bague de blocage sont enclipsées autour de la première partie de support interne de harnais entre la cloison et la première bague de blocage de sorte que l'ajustement par enclipsage de la première bague de blocage vienne serrer la deuxième bague de blocage contre la seconde face de la cloison. En particulier, ce serrage peut être provoqué par la pression exercée sur des parois complémentaires inclinées des deux bagues de blocage.

### PRESENTATION DES FIGURES

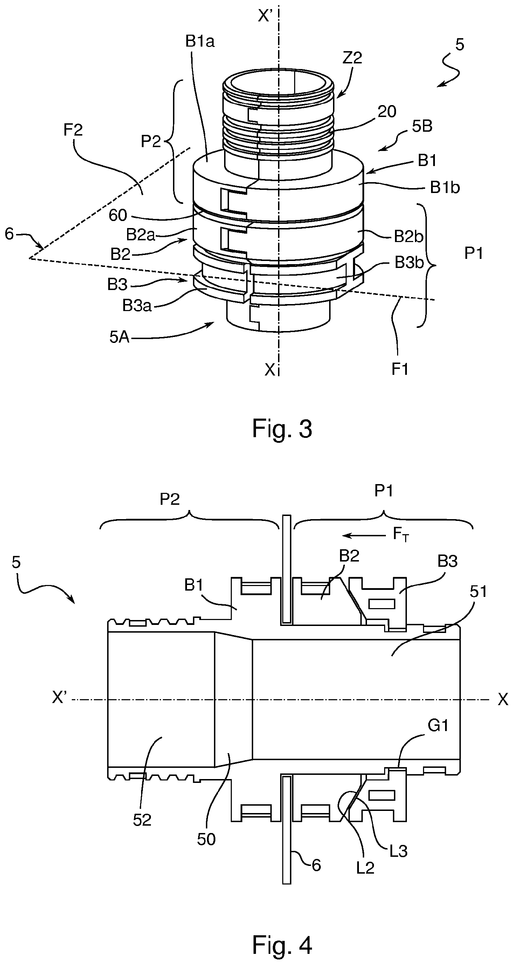

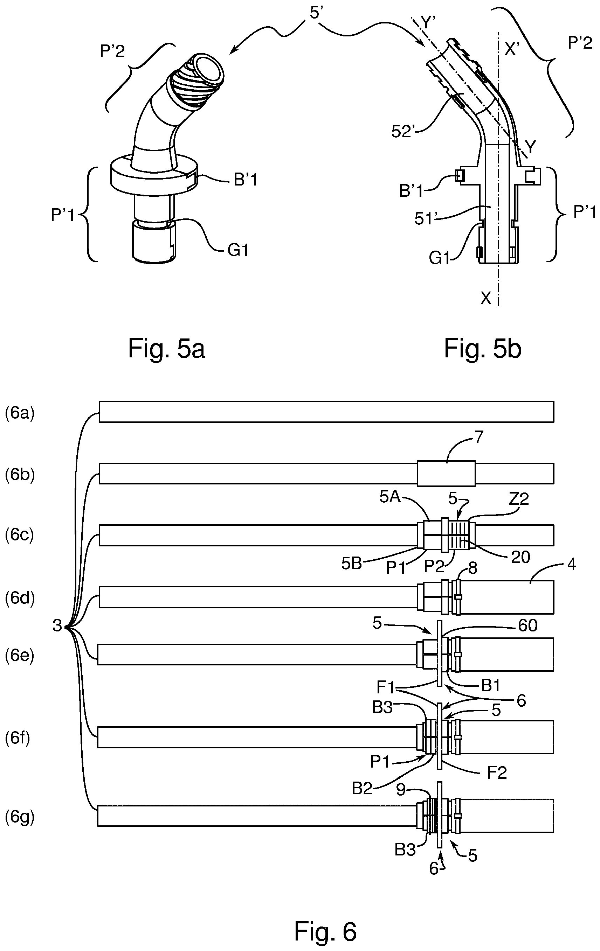

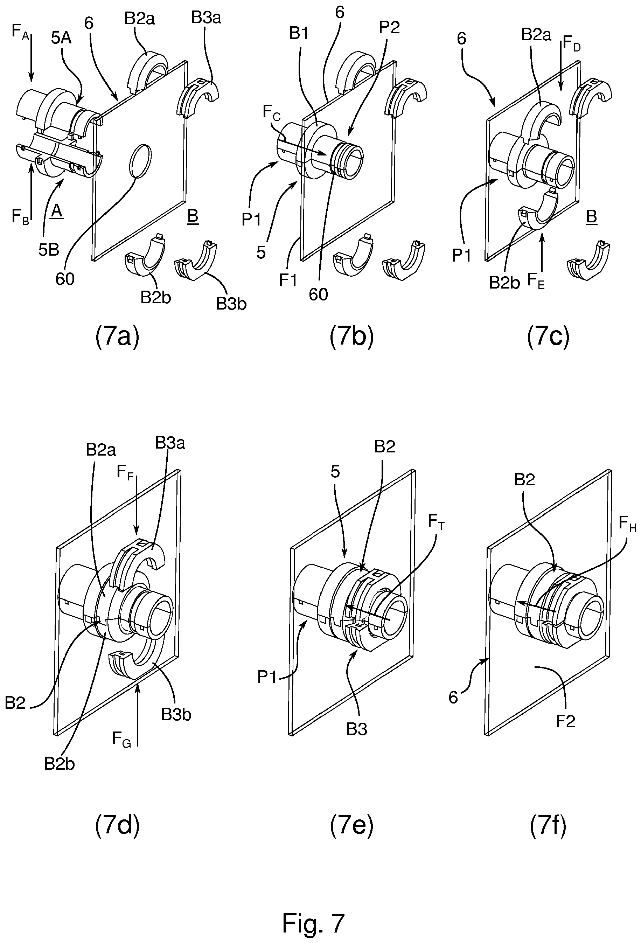

D'autres aspects et particularités de la mise en œuvre de l'invention apparaîtront à la lecture de la description détaillée qui suit, accompagnée de dessins annexés qui représentent, respectivement :
- en figures 1 et 2, des vues en coupe partielle d'un chemin de câble et d'un adaptateur de sortie de harnais selon l'état de la technique;
- en figure 3, une vue en perspective d'un exemple d'adaptateur selon l'invention après assemblage de ses deux demi-coques;
- en figure 4, une vue en coupe de l'exemple d'adaptateur selon la figure précédente;
- en figures 5a et 5b, des vues en perspective et en coupe d'un exemple d'adaptateur selon l'invention à sortie de harnais à 45°;
- en figure 6, des vues schématiques (schéma 6a à 6g) d'un exemple de mise en œuvre des principales étapes du procédé d'installation d'un adaptateur de sortie de harnais selon l'invention, et
- en figure 7, des vues de différentes phases (schémas 7a à 7f) d'assemblage et de positionnement de l'adaptateur contre la cloison servant de support dans des étapes finales du procédé d'installation selon la figure 6.

### DESCRIPTION DETAILLEE

Des signes de référence identiques utilisés dans différentes figures se rapportent à un même élément. Le terme « longitudinal » qualifie des éléments s'étendant selon une direction ou une dimension principale.

En référence à la vue en perspective de la figure 3, l'exemple d'adaptateur 5 selon l'invention est illustré après assemblage de ses deux demi-coques 5A et 5B, présentant alors une surface extérieure cylindrique d'axe longitudinale linéaire X'X. L'adaptateur 5 ainsi assemblé se décompose en une première partie P1 de support interne de harnais venant du faisceau de câbles 2 (cf. figures 1 et 2) prolongée par une deuxième partie P2 de sortie de harnais à prise externe.

Les coques 5A et 5B ainsi que les bagues externes B1 à B3 sont en matériau plastique réalisé par impression 3D en couches additives (procédé dit « ALM » acronyme de « Additive Layer Manufacturing »). Ce matériau est capable de résister à de hautes températures, avantageusement supérieures à 175°C, et est de préférence recouvert d'une couche de protection EMI en nickel plaqué de cuivre.

La deuxième partie P2 de sortie comporte une bague de positionnement B1 moulée avec la partie P2, cette bague de positionnement B1 étant constituée de deux demi-bagues enclipsées B1a et B1b, provenant des demi-coques 5A et 5B, pour positionner l'adaptateur 5 contre la face F1 de la cloison plane 6 servant de support à l'adaptateur, une fois introduit dans un orifice 60 de la cloison 6.

La première partie de support interne de harnais P1 comporte deux bagues de blocage B2 et B3, chacune de ces bagues B2 et B3 étant constituée de deux demi-bagues, B2a, B2b et B3a, B3b. Ces bagues de blocage B2 et B3 viennent s'ajuster sur cette partie P1 par enclipsage, après introduction de la première partie P1 à travers l'orifice de cloison 60, pour consolider le positionnement de l'adaptateur 5 par appui contre la seconde face F2 de la cloison 6. Cette deuxième partie P2 présente également, dans sa zone d'extrémité de sortie à base circulaire Z2, un filetage 20 pour coupler cette zone d'extrémité Z2 à des gaines de protection métallique et de protection EMI 4 (cf. schéma 6 de la figure 6) avec, avantageusement, un sur-tressage externe.

Vue en coupe selon la figure 4, les première et deuxième parties P1 et P2 de l'adaptateur 5 présentent chacun un alésage cylindrique de base circulaires 51 et 52, l'alésage 52 de sortie de harnais ayant avantageusement un diamètre supérieur à celui de l'alésage 51 de support interne du harnais. Un alésage 50 de diamètre linéairement variable, située dans la deuxième partie, assure de préférence la transition entre les alésages 51 et 52.

Sur cette figure 4, apparaissent également la bague B1 de positionnement contre la cloison 6, telle que clipsée en surface de la deuxième partie P2 de l'adaptateur 5, ainsi que les bagues B2 et B3 de blocage contre la cloison 6, telles qu'ajustées à la surface de la première partie P1 de l'adaptateur 5. Les bagues de blocage B2 et B3 présentent des faces latérales parallèles L2 et L3 inclinées de sorte que, lorsque les demi-bagues formant la bague B3 sont enclipsées dans la gorge G1, la bague B3 exerce une pression en translation latérale (flèche F_{T}) sur la bague B2 qui vient alors en appui contre la face cloison 6. Ce mécanisme est également détaillé en référence à la figure 7.

Un autre exemple d'adaptateur 5' selon l'invention est illustré par les vues en perspective et en coupe des figures 5a et 5b. Cet adaptateur 5' est coudé en sortie à 45°, angle que forme les axes longitudinaux X'X et Y'Y, respectivement des première P'1 et deuxième P'2 parties de l'adaptateur 5'. Sur ces figures 5a et 5b sont représentées la bague de positionnement B'1 de la deuxième partie P'2, et la gorge G1 dans laquelle une bague de blocage vient s'ajuster, telle que la bague B3 de la partie P1 de l'adaptateur 5 (cf. figures 3 ou 4). En outre, l'alésage cylindrique 52' de la deuxième partie à prise externe P'2 présente avantageusement un diamètre supérieur à celui de l'alésage cylindrique 51' de la première partie de support de harnais P'1.

De manière plus générale, des orientations de la deuxième partie P'2 de l'adaptateur 5' par rapport à la première P'1 peuvent être réalisées, en particulier en impression 3D (procédé de fabrication à couches additives ALM), dans un large intervalle, par exemple depuis une sortie droite à 0° (comme illustré par l'adaptateur 5 des figures 3 ou 4) et jusqu'à environ 90°, voire au-delà.

Un exemple de mise en œuvre des principales étapes du procédé d'installation selon l'invention d'un adaptateur, tel que l'adaptateur 5 à sortie droite (cf. figures 3 et 4), est illustré par les différentes vues schématiques (schéma 6a à 6g) de la figure 6.

Après avoir constituer le harnais 3 par sélection de câbles du chemin de câblage 1 (cf. figures 1 ou 2), comme indiqué sur le schéma 6a, une portion du harnais 3 est enveloppée par une bande de protection, une gaine thermo-rétractable 7 dans l'exemple de mise en œuvre (schéma 6b). Cette gaine 7 est positionnée sur un emplacement prédéfini par le positionnement final de l'adaptateur 5.

Sur le schéma suivant (schéma 6c) les deux demi-coques 5A et 5B de l'adaptateur 5 sont enclipsées autour de la gaine de protection 7 de longueur légèrement supérieure à la longueur de l'adaptateur 5, ce qui assure une protection au-delà des extrémités de l'adaptateur 5. Puis (schéma 6d) des gaines externes de protection métallique et de protection EMI 4 à sur-tressage sont couplées à l'adaptateur 5 en prise sur le filetage 20 formé dans la zone d'extrémité Z2 de sa partie P2. Les gaines externes 4 sont ensuite ajustées en position par un collier de serrage 8.

En référence au schéma 6e, l'adaptateur 5 est introduit dans l'orifice 60 de la cloison 6 servant de support jusqu'à ce que la bague de positionnement B1 vienne en contact contre la face F1 de la cloison 6. L'étape suivante (schéma 6f) consiste à enclipser les demi-bagues pour former les bagues de blocage B2 et B3 sur la première partie P1 et consolider ainsi la position de l'adaptateur 5 par un serrage sur les deux faces F1 et F2 de la cloison 6. A la dernière étape (schéma 6g), la bague de blocage B3 est légèrement comprimée par un collier de serrage 9 afin de finaliser le maintien de l'adaptateur 5 sur la cloison 6.

Les étapes d'assemblage et de positionnement de l'adaptateur 5 contre la cloison 6 sont décomposées sur les schémas 7a à 7f de la figure 7. Les deux demi-coquilles 5A et 5B de l'adaptateur sont assemblées (flèches de rapprochement F_{A} et F_{B}) d'un côté « A » de la cloison 6 (schéma 7a) pour traverser l'orifice 60 de la cloison 6. Les demi-bagues B2a-B2b et B3a-B3b sont positionnées en regard de l'autre côté « B » de la cloison 6. Puis (schéma 7b) la première partie P1 de l'adaptateur 5 traverse l'orifice 60 de la cloison 6 (flèche Fc) jusqu'à ce que la bague de positionnement B1 de la deuxième partie P2 vienne en contact contre la face F1 de la cloison 6.

Les deux demi-bagues B2a et B2b sont ensuite assemblées (flèches de rapprochement F_{D} et F_{E} du schéma 7c) de l'autre côté « B » de la cloison 6 autour de la première partie P1. Une fois les demi-bagues B2a et B2b enclipsées pour former la bague de blocage B2, schéma 7d), les demi-bagues de blocage B3a et B3b sont assemblées (flèches de rapprochement F_{F} et F_{G} su schéma 7d) pour former la bague de blocage B3 dans la gorge G1 (cf. figure 4) de la première partie P1 de l'adaptateur 5 (schéma 7e).

Lors de cet assemblage, la bague de blocage B3 exerce une pression en translation latérale (flèche F_{T}) sur la bague de blocage B2 du fait de leurs parois de contact inclinées et de l'ancrage de la bague de blocage B3 dans la gorge G1 (cf. figure 4). Dans ces conditions, la bague de blocage B2 se déplace en translation (cf. flèche F_{H} du schéma 7f) et vient alors en appui contre la face F2 de la cloison 6.

L'invention n'est pas limitée aux exemples de réalisation décrits ou représentés. Par exemple, le mécanisme de blocage peut être mis en œuvre par une bague de blocage unique agencée contre la cloison et comprimée par un collier de serrage, ou par la pression exercée par deux bagues de blocage à parois de contact inclinées, comme détaillé dans l'exemple de réalisation.

L'alésage transitoire de couplage entre les alésages des première et deuxième partie de l'adaptateur peut former une surface présentant un changement de courbure ou par palier ou encore non linéairement progressif.

Par ailleurs, le matériau plastique thermorésistant de l'adaptateur, pouvant être utilisé dans une impression 3D, est choisi parmi des matériaux à base de polyimides thermoplastiques, par exemple les polyétherimides (dits PEI), de PLA (acide polylactique), de ABS (acrylonitrile butadiène styrène), de polyamides, en particulier de « PA 66 », d'alumide (combinaison de polyamide et aluminium), de résines thermoplastiques ou thermodurcissables, de PEEK (polyétheréthercétone), de et de plastiques composites.

## Revendications

1. Adaptateur de sortie de harnais (5) d'un chemin de câblage (1) formant une pièce cylindrique s'étendant selon au moins un axe longitudinale (X'X, Y'Y) et définissant deux parties cylindriques (P1, P2), une première partie cylindrique (P1) de support interne de harnais (3), et une deuxième partie cylindrique (P2) de sortie à prise externe (20) d'au moins une gaine de protection (4) du harnais (3), **caractérisé en ce qu'**il comporte deux demi-coques demi-cylindriques (5A, 5B) en matériau plastique, assemblées de manière complémentaire pour former la pièce cylindrique, **en ce que** deux demi-bagues de positionnement enclipsées (B1a, B1b) forment une bague de positionnement (B1) de l'adaptateur (5) venant des demi-coques (5A, 5B) au niveau de la deuxième partie de prise externe (P2), et **en ce que** deux demi-bagues de blocage enclipsées (B3a, B3b) forment une bague de blocage (B3) autour d'une gorge (G1) creusée sur la première partie cylindrique (P1), la bague de blocage (B3) étant comprimée par un collier de serrage (9).

2. Adaptateur selon la revendication 1, dans lequel les parties cylindriques (P1, P2) comportent des alésages internes cylindriques de base circulaire (51, 52) le long d'une bande de protection (7), l'alésage interne (52) de la deuxième partie (P2) de sortie de harnais à prise externe (20) présentant un diamètre supérieur à la première partie (P1) de support interne du harnais (3).

3. Adaptateur selon la revendication précédente, dans lequel les alésages (51, 52) des parties cylindriques (P1, P2) sont couplés par un alésage transitoire (50) situé dans la deuxième partie de sortie de harnais (P2).

4. Adaptateur selon la revendication précédente, dans lequel l'alésage transitoire (50) présente un diamètre linéairement progressif situé dans la deuxième partie de sortie de harnais (P2).

5. Adaptateur selon la revendication précédente, dans lequel une deuxième bague de blocage (B2) formée de deux demi-bagues enclipsées (B2a, B2b) est agencée entre la première bague de blocage (B3) et la bague de positionnement (B1) de la première partie (P1) de l'adaptateur (5).

6. Adaptateur de liaison selon l'une quelconque des revendications précédentes, dans lequel la deuxième partie de sortie de harnais (P2) forme un angle compris entre 0 et 90° avec la première partie de support interne (P1).

7. Adaptateur selon la revendication précédente, dans lequel la deuxième partie de sortie de harnais (P2) est couplée à deux gaines de protection du harnais (3), une gaine métallique et une gaine de protection EMI (4), avantageusement équipées d'un sur-tressage.

8. Adaptateur selon l'une quelconque des revendications précédentes, dans lequel le matériau plastique est constitué de couches additives produites en impression 3D et recouvertes d'un dépôt métallique de protection EMI.

9. Adaptateur selon l'une quelconque des revendications précédentes, dans lequel le matériau plastique est choisi parmi des matériaux à base de polyimides thermoplastiques, par exemple les polyétherimides (dits PEI), de PLA (acide polylactique), de ABS (acrylonitrile butadiène styrène), de polyamides, en particulier de « PA 66 », d'alumide (combinaison de polyamide et aluminium), de résines thermoplastiques ou thermodurcissables, de PEEK (polyétheréthercétone), et de plastiques composites.

10. Adaptateur selon l'une quelconque des revendications 2 à 4, dans lequel la bande de protection (7) du harnais (3) au niveau des alésages internes (51, 52) est constituée d'un matériau choisi entre une gaine textile, un matériau thermo-rétractable et un matériau auto-amalgamant.

11. Aéronef équipé de chemins de câblage (1) et d'adaptateurs (5) de sortie de harnais selon l'une quelconque des revendications précédentes, **caractérisé en ce que** des harnais (3) sont répartis en sortie des chemins de câble (1) vers différents systèmes avioniques afin de les alimenter en puissance électrique.

12. Procédé d'installation d'un adaptateur de sortie de harnais selon l'une quelconque des revendications 2 à 10 en sortie d'un chemin de câblage (1), **caractérisé en ce qu'**il comporte les étapes successives suivantes:
- constituer le harnais (3) par sélection de câbles (2) du chemin de câblage (1);
- envelopper une portion du harnais (3) par une bande de protection (7), de longueur supérieure à la longueur de l'adaptateur (5), à un emplacement prédéfini par le positionnement final de l'adaptateur (5);
- assembler les deux demi-coques (5A, 5B) de l'adaptateur (5) autour de la bande de protection (7);
- emmancher au moins une gaine de protection (4) sur le harnais (3) en sortie de l'adaptateur (5) par couplage en prise (20) sur la deuxième partie de sortie de harnais (P2) et introduire le harnais (3) dans un orifice (60) de cloison servant de support (6);
- positionner l'adaptateur 5) dans l'orifice (660) de la cloison (6) de sorte que la bague de positionnement (B1) de la deuxième partie de sortie de harnais (P2) vienne en contact contre une première face (F1) de la cloison (6);
- enclipser les demi-bagues (B3a, B3b,) de blocage pour former la bague de blocage (B3) dans la gorge (G1) de la première partie de support interne de harnais (P1) et consolider le positionnement de l'adaptateur (5) par pression de cette bague de blocage (B3) contre la seconde face (F2) de la cloison (6), et
- comprimer la bague de blocage (B3) par le collier de serrage (9) contre la cloison (6).

13. Procédé d'installation selon la revendication précédente, dans lequel deux demi-bagues (B2a, B2b) d'une deuxième bague de blocage (B2) sont enclipsées autour de la première partie de support interne de harnais (P1) entre la cloison (6) et la première bague de blocage (B3) de sorte que l'ajustement par enclipsage de la première bague de blocage (B3) vienne serrer la deuxième bague de blocage (B2) contre la seconde face (F2) de la cloison.

14. Procédé d'installation selon la revendication précédente, dans lequel le serrage de la deuxième bague de blocage (B2) est provoqué (F_{H}) par la pression exercée sur des parois complémentaires inclinées (L2, L3) des deux bagues de blocage (B2, B3).

## Patentansprüche

1. Kabelbaumausgangsadapter (5) einer Kabelleiste (1), welcher ein zylindrisches Teil bildet, das sich entlang wenigstens einer Längsachse (X'X, Y'Y) erstreckt und zwei zylindrische Teilstücke (P1, P2) definiert, ein erstes zylindrisches Teilstück (P1) zur inneren Abstützung des Kabelbaums (3) und ein zweites zylindrisches Ausgangsteilstück (P2) zum äußeren Eingriff (20) wenigstens einer Schutzhülle (4) des Kabelbaums (3), **dadurch gekennzeichnet, dass** er zwei halbzylinderförmige Halbschalen (5A, 5B) aus Kunststoffmaterial umfasst, die komplementär zusammengefügt sind, um das zylindrische Teil zu bilden, dadurch, dass zwei zusammengeschnappte Positionierungshalbringe (B1a, B1b) einen Positionierungsring (B1) des aus den Halbschalten (5A, 5B) gebildeten Adapters (5) am zweiten Teilstück zum äußeren Eingriff (P2) bilden, und dadurch, dass zwei zusammengeschnappte Blockierhalbringe (B3a, B3b) einen Blockierring (B3) um eine am ersten zylindrischen Teilstück (P1) eingearbeitete Nut (G1) bilden, wobei der Blockierring (B3) durch eine Klemmschelle (9) zusammengedrückt wird.

2. Adapter nach Anspruch 1, wobei die zylindrischen Teilstücke (P1, P2) entlang eines Schutzbandes (7) zylindrische Innenbohrungen (51, 52) mit kreisförmiger Grundfläche umfassen, wobei die Innenbohrung (52) des zweiten Kabelbaumausgangs-Teilstücks (P2) zum äußeren Eingriff (20) einen größeren Durchmesser aufweist als diejenige des ersten Teilstücks (P1) zur inneren Abstützung des Kabelbaums (3).

3. Adapter nach dem vorhergehenden Anspruch, wobei die Bohrungen (51, 52) der zylindrischen Teilstücke (P1, P2) durch eine Übergangsbohrung (50) verbunden sind, die sich im zweiten Kabelbaumausgangs-Teilstück (P2) befindet.

4. Adapter nach dem vorhergehenden Anspruch, wobei die Übergangsbohrung (50) einen linear zunehmenden Durchmesser aufweist, der sich im zweiten Kabelbaumausgangs-Teilstück (P2) befindet.

5. Adapter nach dem vorhergehenden Anspruch, wobei ein zweiter Blockierring (B2), der von zwei zusammengeschnappten Blockierhalbringen (B2a, B2b) gebildet wird, zwischen dem ersten Blockierring (B3) und dem Positionierungsring (B1) des ersten Teilstücks (P1) des Adapters (5) angeordnet ist.

6. Adapter zur Verbindung nach einem der vorhergehenden Ansprüche, wobei das zweite Kabelbaumausgangs-Teilstück (P2) mit dem ersten Teilstück zur inneren Abstützung (P1) einen Winkel zwischen 0 und 90° bildet.

7. Adapter nach dem vorhergehenden Anspruch, wobei das zweite Kabelbaumausgangs-Teilstück (P2) mit zwei Schutzmänteln des Kabelbaums (3) gekoppelt ist, einem metallischen Mantel und einem Schutzmantel gegen EMI (4), die vorteilhafterweise mit einer Umflechtung ausgestattet sind.

8. Adapter nach einem der vorhergehenden Ansprüche, wobei das Kunststoffmaterial aus additiven Schichten besteht, die durch 3D-Druck hergestellt sind und mit einem metallischen Schutzüberzug gegen EMI bedeckt sind.

9. Adapter nach einem der vorhergehenden Ansprüche, wobei das Kunststoffmaterial ausgewählt ist aus Materialien auf der Basis von thermoplastischen Polyimiden, zum Beispiel Polyetherimiden (mit PEI bezeichnet), von PLA (Polymilchsäure), von ABS (Acrylnitril-Butadien-Styrol), von Polyamiden, insbesondere von "PA 66", von Alumid (Kombination von Polyamid und Aluminium), von thermoplastischen oder duroplastischen Harzen, von PEEK (Polyetheretherketon) und von Verbundkunststoffen.

10. Adapter nach einem der Ansprüche 2 bis 4, wobei das Schutzband (7) des Kabelbaums (3) im Bereich der Innenbohrungen (51, 52) aus einem Material besteht, das aus einer Faserstoffumhüllung, einem wärmeschrumpfbaren Material und einem selbstamalgamierenden Material ausgewählt ist.

11. Luftfahrzeug, welches mit Kabelleisten (1) und Kabelbaumausgangsadaptern (5) nach einem der vorhergehenden Ansprüche ausgestattet ist, **dadurch gekennzeichnet, dass** Kabelbäume (3) am Ausgang der Kabelleisten (1) zu verschiedenen Avioniksystemen hin verteilt werden, um sie mit elektrischer Leistung zu versorgen.

12. Verfahren zur Installation eines Kabelbaumausgangsadapters nach einem der Ansprüche 2 bis 10 am Ausgang einer Kabelleiste (1), **dadurch gekennzeichnet, dass** es die folgenden aufeinander folgenden Schritte umfasst:
- Bilden des Kabelbaums (3) durch Auswahl von Kabeln (2) der Kabelleiste (1);
- Umhüllen eines Abschnitts des Kabelbaums (3) mit einem Schutzband (7) mit einer Länge, die größer als die Länge des Adapters (5) ist, an einer durch die endgültige Positionierung des Adapters (5) vordefinierten Stelle;
- Zusammenfügen der zwei Halbschalen (5A, 5B) des Adapters (5) um das Schutzband (7) herum;
- Aufziehen wenigstens eines Schutzmantels (4) auf den Kabelbaum (3) am Ausgang des Adapters (5) durch Ineingriffbringen (20) auf dem zweiten Kabelbaumausgangs-Teilstück (P2) und Einführen des Kabelbaums (3) in eine Öffnung (60) einer als Träger dienenden Trennwand (6);
- Positionieren des Adapters (5) in der Öffnung (660) der Trennwand (6), derart, dass der Positionierungsring (B1) des zweiten Kabelbaumausgangs-Teilstücks (P2) mit einer ersten Seite (F1) der Trennwand (6) in Kontakt kommt;
- Zusammenschnappen der Blockierhalbringe (B3a, B3b), um den Blockierring (B3) in der Nut (G1) des ersten Teilstücks (P1) zur inneren Abstützung des Kabelbaums zu bilden, und Festigen der Positionierung des Adapters (5) durch Drücken dieses Blockierringes (B3) gegen die zweite Seite (F2) der Trennwand (6), und
- Zusammendrücken des Blockierringes (B3) durch die Klemmschelle (9) gegen die Trennwand (6).

13. Verfahren zur Installation nach dem vorhergehenden Anspruch, wobei zwei Halbringe (B2a, B2b) eines zweiten Blockierringes (B2) um das erste Teilstück (P1) zur inneren Abstützung des Kabelbaums herum zwischen der Trennwand (6) und dem ersten Blockierring (B3) zusammengeschnappt werden, derart, dass das Einpassen des ersten Blockierringes (B3) durch Zusammenschnappen bewirkt, dass der zweite Blockierring (B2) an die zweite Seite (F2) der Trennwand angedrückt wird.

14. Verfahren zur Installation nach dem vorhergehenden Anspruch, wobei das Andrücken des zweiten Blockierringes (B2) durch den Druck (F_{H}) hervorgerufen wird, der auf geneigte komplementäre Wände (L2, L3) der zwei Blockierringe (B2, B3) ausgeübt wird.

## Claims

1. A cable harness output adaptor (5) for a cable tray (1) forming a cylindrical piece extending along at least one longitudinal axis (X'X, Y'Y) and defining two cylindrical parts (P1, P2), a first cylindrical part (P1) for internal cable harness support (3), and a second, cylindrical output part (P2) with external grip (20) of at least one protective sheath (4) of the cable harness (3), **characterized in that** it comprises two semi-cylindrical half-shells (5A, 5B) made of plastic material, assembled in a complementary manner to form the cylindrical piece, **in that** two snap-fitted positioning half-rings (B1a, B1b) form a positioning ring (B1) for the adaptor (5) coming from the half-shells (5A, 5B) at the second, external grip part (P2), and **in that** two snap-fitted blocking half-rings (B3a, B3b) form a blocking ring (B3) around a groove (G1) hollowed out on the first cylindrical part (P1), the blocking ring (B3) being compressed by a clamping collar (9).

2. The adaptor as claimed in claim 1, wherein the cylindrical parts (P1, P2) comprise cylindrical internal bores of circular base (51, 52) along a protective strip (7), the internal bore (52) of the second, cable harness output part (P2) with external grip (20) having a diameter greater than the first part (P1) for internal support of the cable harness (3).

3. The adaptor as claimed in the preceding claim, wherein the bores (51, 52) of the cylindrical parts (P1, P2) are coupled by a transitional bore (50) situated in the second, cable harness output part (P2).

4. The adaptor as claimed in the preceding claim, wherein the transitional bore (50) has a linearly progressive diameter situated in the second, cable harness output part (P2).

5. The adaptor as claimed in the preceding claim, wherein a second blocking ring (B2) formed by two snap-fitted half-rings (B2a, B2b) is arranged between the first blocking ring (B3) and the positioning ring (B1) of the first part (P1) of the adaptor (5).

6. The link adaptor as claimed in any one of the preceding claims, wherein the second, cable harness output part (P2) forms an angle of between 0 and 90° with the first, internal support part (P1).

7. The adaptor as claimed in the preceding claim, wherein the second, cable harness output part (P2) is coupled to two protective sheaths of the cable harness (3), a metal sheet and an EMI protection sheet (4), advantageously fitted with an over-braiding.

8. The adaptor as claimed in any one of the preceding claims, wherein the plastic material is composed of additive layers produced by 3D printing and covered with a metal, EMI protection deposition.

9. The adaptor as claimed in any one of the preceding claims, wherein the plastic material is chosen from among the materials based on thermoplastic polyimides, for example the polyetherimides (called PEI), PLA (polylactic acid), ABS (acrylonitrile butadiene styrene), polyamides, in particular "PA 66", alumide (combination of polyamide and of aluminum), thermoplastic or thermosetting resins, PEEK (polyetheretherketone), and composite plastics.

10. The adaptor as claimed in any one of claims 2 to 4, wherein the protective strip (7) of the cable harness (3) at the internal bores (51, 52) is composed of a material chosen from among a fabric sheath, a heat-shrinkable material and a self-amalgamating material.

11. An aircraft equipped with cable trays (1) and cable harness output adaptors (5) as claimed in any one of the preceding claims, **characterized in that** cable harnesses (3) are distributed at the output of the cable trays (1) to different avionic systems in order to supply them with electrical power.

12. Method for installing a harness exit adaptor as claimed in any one of claims 2 to 10 at the output of a cable tray (1), **characterized in that** it comprises the following successive steps:
- forming the cable harness (3) by the selection of cables (2) of the cable tray (1);
- jacketing a portion of the cable harness (3) with a protective strip (7), of a length greater than the length of the adaptor (5), at a location predefined by the final positioning of the adaptor (5);
- assembling the two half-shells (5A, 5B) of the adaptor (5) around the protective strip (7);
- fitting at least one protective sheath (4) over the cable harness (3) at the output of the adaptor (5) by grip-coupling (20) on the second, cable harness output part (P2) and introducing the cable harness (3) into an orifice (60) of a partition serving as support (6);
- positioning the adaptor (5) in the orifice (660) of the partition (6) so that the positioning ring (B1) of the second, cable harness output part (P2) comes into contact against a first face (F1) of the partition (6);
- snap-fitting the blocking half-rings (B3a, B3b) to form the blocking ring (B3) in the groove (G1) of the first, internal cable harness support part (P1) and consolidating the positioning of the adaptor (5) by pressing this blocking ring (B3) against the second face (F2) of the partition (6), and
- compressing the blocking ring (B3) by the clamping collar (9) against the partition (6).

13. The installation method as claimed in the preceding claim, wherein two half-rings (B2a, B2b) of a second blocking ring (B2) are snap-fitted around the first, internal cable harness support part (P1) between the partition (6) and the first blocking ring (B3) so that the adjustment by snap-fitting of the first blocking ring (B3) clamps the second blocking ring (B2) against the second face (F2) of the partition.

14. The installation method as claimed in the preceding claim, wherein the clamping of the second blocking ring (B2) is provoked (F_{H}) by the pressure exerted on inclined complementary walls (L2, L3) of the two blocking rings (B2, B3).
